# EUROPEAN PATENT APPLICATION

(11) **EP 3 276 315 A1**
(43) Date of publication of application: **31.01.2018**
(21) Application number: 16768691.4
(22) Date of filing: 18.03.2016
(51) Int. Cl.: G01K 11/06

(54) **TEMPERATURE-REGULATING MEDIUM**

(30) Priority: 26.03.2015 JP 2015063990
(71) Applicant: Horiuchi Electronics Co. Ltd., Tokyo 146-0095 (JP)
(72) Inventor: MISUMI Yohei, Tokyo 146-0095 (JP); AKUTAGAWA Issei, Tokyo 146-0095 (JP)
(74) Representative: SR Huebner - Munich Patentanwaltspartnerschaft mbB
(86) International application number: PCT/JP2016/058726
(87) International publication number: WO 2016/152788

(57) **Abstract**

[Problem]

To provide a temperature-indicating medium using an emulsion that maintains high transparency at a room temperature even if the emulsion contains a high molecular weight fat, and that, after being solidified, is reliably separated into an aqueous phase and an oil phase when the temperature is raised to a predetermined temperature.

[Solution]

A temperature-indicating medium comprising an emulsion which is in a liquid form at a room temperature, solidified when cooled to a predetermined temperature, and melted and phase-separated when a temperature is raised from the solidified temperature, wherein the emulsion comprises water, a fat, an emulsifier, a polyhydric alcohol, and a charge neutralization agent, and an aqueous phase ratio which is a ratio of a sum of the water, the polyhydric alcohol, and the charge neutralization agent, relative to the total amount of the water, the fat, the emulsifier, the polyhydric alcohol, and the charge neutralization agent, is 10 to 50% by mass.

## Description

### Technical Field

The present disclosure relates to a temperature-indicating medium which shows phase separation when an article on which said medium is affixed is once exposed to an atmosphere having a temperature lower than a predetermined temperature range, and subsequently exposed to an atmosphere having a temperature higher than said predetermined temperature.

### Background Art

With the increase of articles delivered in a frozen state or a refrigerated state, temperature indication while such articles are delivered, has become an important issue. In particular, when frozen or refrigerated articles are taken out from frozen/refrigerated facilities to load the articles on a delivery truck, to deliver the articles, and the like, the temperature of the articles can be raised to a temperature higher than a predetermined temperature.

In order to easily perform the temperature indication of such articles which need to be delivered under a frozen/refrigerated state, a temperature-indicating medium comprising an emulsified liquid which is in a liquid form at the room temperature, and which is solidified when being cooled to a predetermined temperature, the solidified emulsified liquid being melted as the temperature rises and being phase separated, is used.

Particularly, in recent years, there has been an attempt to prepare a temperature-indicating medium using an emulsion which contains a fat having a comparatively high molecular weight, such as triglyceride. However, the emulsion constituting the above temperature-indicating medium is white both before and after the solidification. Thus, visually confirming whether or not the emulsion is solidified, is difficult. In order to solve this problem, for example, the following Patent Document 1 discloses adding saccharides to an emulsion which contains a fat having a high molecular weight, so as to obtain a temperature-indicating medium capable of suppressing a white turbidity and having a high transparency at a room temperature.

Further, Patent Document 2 discloses a temperature-indicating medium comprising a substance for controlling the solidifying point of an emulsion within a desired range, and further comprising a charge neutralization agent for extending the time taken before the phase separation occurs when the temperature is raised to a separation temperature.

### Prior Art

### Patent Document

Patent Document 1: Japanese Unexamined Patent Publication (Kokai) No. 2009-210348
Patent Document 2: Japanese Unexamined Patent Publication (Kokai) No. 2015-40792

### Summary

### Problems to be Solved by the Present Disclosure

The technology disclosed in Patent Document 1 has advantages that an emulsion having higher transparency at a room temperature and having lower transparency when solidified, can be obtained, when 20 or more and less than 400 parts by mass of saccharide per 100 parts by mass of water is added to the emulsion. Whereas, the technology disclosed in Patent Document 1 has drawbacks that separation into the aqueous phase and the oil phase may not occur when the temperature is raised to a predetermined temperature.
For the purpose of supplementing the explanation below, here, the amount of saccharide mentioned in "parts by mass" is expressed by "% by mass", namely, the amount of saccharide mentioned above is equal to 16.7% by mass or more and less than 80% by mass. Further, the technology disclosed in Patent Document 2 has drawbacks that the emulsion having high transparency cannot be obtained at a room temperature.

In view of the above drawbacks of the prior arts, one of the objectives of the present disclosure is to provide a temperature-indicating medium using an emulsion which contains a fat having a high molecular weight, and is still capable of maintaining high transparency at a room temperature and certainly being separated into the aqueous phase and the oil phase when the temperature is raised to a predetermined temperature after the emulsion is solidified.

### Solving Means

In order to attain the above objectives, an embodiment of the present disclosure is a temperature-indicating medium comprising an emulsion which is in a liquid form at a room temperature, solidified when cooled to a predetermined temperature, and melted and phase-separated when a temperature is raised from the solidified temperature, wherein the emulsion comprises water, a fat, an emulsifier, a polyhydric alcohol, and a charge neutralization agent, and an aqueous phase ratio which is a ratio of a sum of the water, the polyhydric alcohol, and the charge neutralization agent, relative to the total amount of the water, the fat, the emulsifier, the polyhydric alcohol, and the charge neutralization agent, is 10 to 50% by mass.

Preferably the charge neutralization agent is an ionic compound which generates at least one ion selected from a group consisting of Na⁺, K⁺, Ca²⁺, Mg²⁺, Cl⁻, H₂PO₄⁻, HPO₄²⁻, and HCO₃⁻.

Further, preferably, the polyhydric alcohol is a saccharide and/or a sugar alcohol.

Also, preferably, the saccharide is one or more saccharides selected from a group consisting of monosaccharides and disaccharides.

Also, preferably, a concentration of the polyhydric alcohol in the aqueous phase consisting of the water, the polyhydric alcohol, and the charge neutralization agent is 15 to 80% by mass.

Also, preferably, the temperature-indicating medium further comprises a dye and an antimicrobial agent.

Also, preferably, the difference in the refractive index between the aqueous phase and the oil phase constituting the emulsion is within 10 Brix%, the aqueous phase consisting of the water, the polyhydric alcohol, and the charge neutralization agent, and the oil phase consisting of the emulsifier and the fat.

Another embodiment of the present disclosure is a temperature-indicating medium comprising an emulsion which is in a liquid form at a room temperature, solidified when cooled to a predetermined temperature, and melted and phase-separated when a temperature is raised from the solidified temperature, wherein the emulsion comprises water, a fat, an emulsifier, a sugar alcohol, and a charge neutralization agent, and an aqueous phase ratio which is a ratio of a sum of the water, the sugar alcohol, and the charge neutralization agent, relative to the total amount of the water, the fat, the emulsifier, the sugar alcohol, and the charge neutralization agent, is preferably 10 to 50% by mass.

Also, preferably, the sugar alcohol is glycerin.

### Effect of the Invention

According to the present disclosure, a temperature-indicating medium capable of maintaining high transparency at a room temperature even if the emulsion used for the medium contains a fat having a high molecular weight, and capable of certainly being separated into the aqueous phase and the oil phase after the medium is solidified and the temperature thereof is subsequently raised to a predetermined temperature, can be obtained.

### BRIEF DESCRIPTION OF DRAWINGS

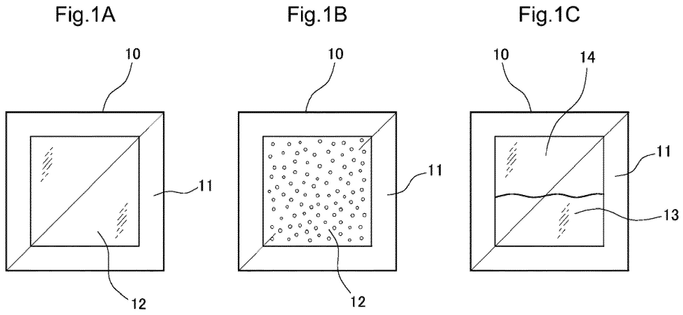

FIG. 1 is an explanatory view of the temperature-indicating medium according to Example 13.

### Embodiment

Hereinbelow, an embodiment of the present disclosure (hereinbelow, referred to as an embodiment) is to be explained.

A temperature-indicating medium according to the present embodiment comprises an emulsion which is in a liquid form at a room temperature, solidified when the emulsion is cooled to a predetermined temperature, and melted and phase-separated when the temperature of the solidified emulsion is raised, the emulsion comprising water, a fat, an emulsifier, a polyhydric alcohol, and a charge neutralization agent. Preferably, the polyhydric alcohol is for example, saccharides and/or sugar alcohols, which can be used solely or as a mixture of some of them. Further, the above emulsion is transparent or translucent at a room temperature.

The ratio of the sum of the water, the polyhydric alcohol, and the charge neutralization agent, relative to the total amount of the water, the fat, the emulsifier, the polyhydric alcohol, and the charge neutralization agent, is referred to as an aqueous phase ratio. The aqueous phase ratio is 10% by mass or more and 50% by mass or less, and preferably 20% by mass or more and 45% by mass or less. If the aqueous phase ratio is less than 10% by mass, the liquid has a high viscosity, and thereby, emulsification is inhibited and generation of an emulsion becomes difficult. Whereas, if the aqueous phase ratio exceeds 50% by mass, the viscosity decreases, and the separation of the emulsion is difficult to occur even if the temperature of the solidified emulsion is raised, and thus, the emulsion does not function well as a temperature-indicating medium.

The emulsion may be an Oil in Water Type (O/W Type) emulsion wherein water is a dispersion medium (continuous phase) and fat is a dispersed phase (discontinuous phase) or a Water in Oil type (W/O type) emulsion wherein fat is a dispersion medium (continuous phase) and water is a dispersed phase (discontinuous phase).

The water constituting the emulsion is not limited and can be any type of water, but taking account of an influence on the emulsifier, deionized water and distilled water are preferable.

The fat constitutes an emulsion together with water and a polyhydric alcohol using an emulsifier (surfactant) at around a room temperature, the fat being solidified (activated) once at a predetermined temperature, for example, -60 to 20ºC, and then, being phase-separated into an aqueous phase and an oil phase along with the temperature increase. Such fats may be edible fats mainly composed of, for example, triacylglycerol (TAG), diacylglycerol (DAG), monoacylglycerol (MAG), and the like. In the emulsion according to the present embodiment, one fat or two or more fats selected from these fats are appropriately used in accordance with the range of activation temperature of the intended temperature-indicating medium (the temperature at which the emulsion starts is solidified). Further, the activation temperature of the temperature-indicating medium may be controlled within a desired temperature range by using a mixture of a fat having a melting point of 0ºC or more and a fat having a melting point of 0ºC or less, mixed at an appropriate ratio, or by appropriately using either one of a fat having a melting point of 0ºC or more and a fat having a melting point of 0ºC or less.

In addition, a viscosity, a fluidity, a melting point, etc., of the emulsion can be adjusted by adding a fatty acid ester, etc., to a fat. Further, the fat, such as TAG, can be uniformly dispersed in the emulsion. Examples of such fatty acid esters are butyl stearate, butyl myristate, isopropyl myristate, methyl myristate, ethyl myristate, propyl myristate, amyl myristate, pentyl myristate, hexyl myristate, heptyl myristate, isobutyl myristate, t-butyl myristate, isoamyl myristate, t-amyl myristate, 2-ethyl hexyl myristate, butyl oleate, isopropyl oleate, methyl oleate, ethyl oleate, propyl oleate, amyl oleate, pentyl oleate, hexyl oleate, heptyl oleate, isobutyl oleate, t-butyl oleate, isoamyl oleate, t-amyl oleate, 2-ethyl hexyl oleate, isopropyl stearate, methyl stearate, ethyl stearate, propyl stearate, amyl stearate, pentyl stearate, hexyl stearate, heptyl stearate, isobutyl stearate, t-butyl stearate, isoamyl stearate, t-amyl stearate, 2-ethyl hexyl stearate, butyl palmitate, isopropyl palmitate, methyl palmitate, ethyl palmitate, propyl palmitate, amyl palmitate, pentyl palmitate, hexyl palmitate, heptyl palmitate, isobutyl palmitate, t-butyl palmitate, isoamyl palmitate, t-amyl palmitate, 2-ethyl hexyl palmitate, butyl laurate, isopropyl laurate, methyl laurate, ethyl laurate, propyl laurate, amyl laurate, pentyl laurate, hexyl laurate, heptyl laurate, isobutyl laurate, t-butyl laurate, isoamyl laurate, t-amyl laurate, 2-ethyl hexyl laurate, and the like. In the constitution of the emulsion, the fatty acid esters are classified as fats.

The emulsifier may be a lipid mixture containing phospholipid. Preferably, the emulsifier contains lecithin and lysolecithin as main components. The above-mentioned activation temperature range of the temperature-indicating medium may also be controlled by changing the mixing ratio of the lecithin and the lysolecithin, or by changing the type, the mixing amount, etc., of the below-mentioned water soluble polymer.

In the emulsion, the lecithin functions as a surfactant for dispersing fine particles of water in a fat, or vice versa. The lecithin may be a soybean lecithin represented by the following general formula (1), an egg-yolk lecithin containing an egg-yolk phospholipid represented by the following general formulae (5) to (8), a lecithin derived from seafood, etc.

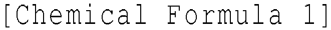

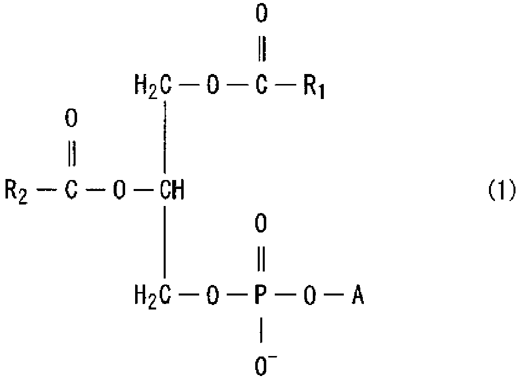

In the above general formula (1), each of R₁ and R₂ represents saturated or unsaturated hydrocarbon. "A" represents a base. For example, when "A" is a base represented by the following formula (2), the soybean lecithin represented by the above general formula (1) is phosphatidylcholine; when "A" is a base represented by the following formula (3), the soybean lecithin represented by the above general formula (1) is phosphatidylethanolamine; when "A" is a base represented by the following formula (4), the soybean lecithin represented by the above general formula (1) is phosphatidylinositol; and when "A" is a hydrogen atom, the soybean lecithin represented by the above general formula (1) is a phosphatidic acid.
[Chemical Formula 2]

CH₂CH₂N⁺(CH₃)₃ (2)

[Chemical Formula 3]

**CH₂CH₂N⁺H₃** (3)

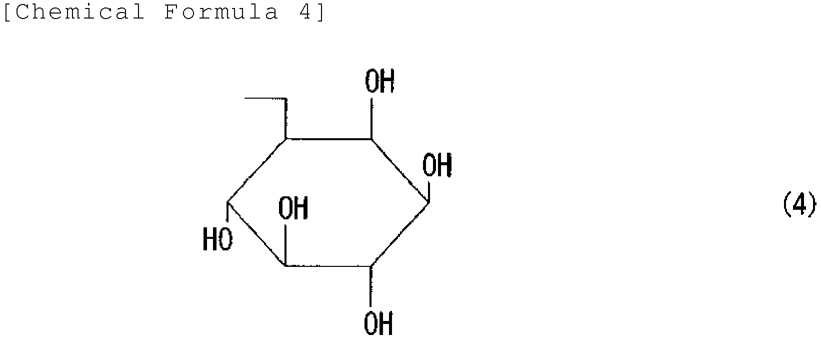

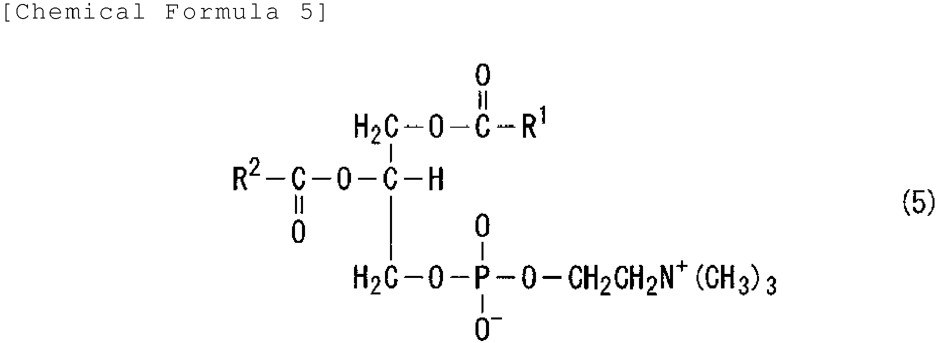

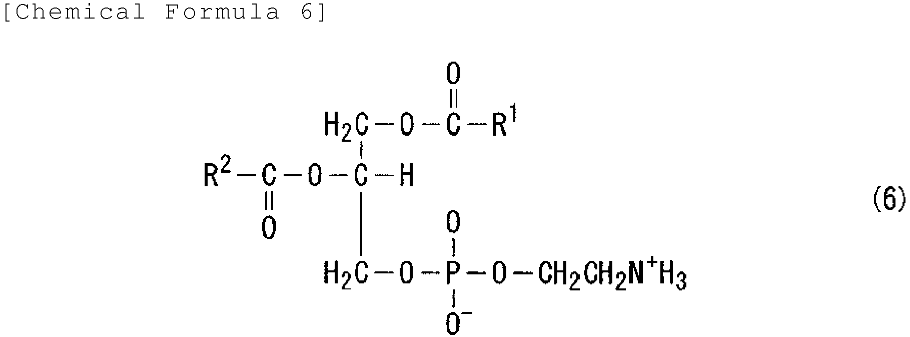

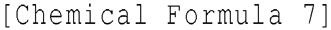

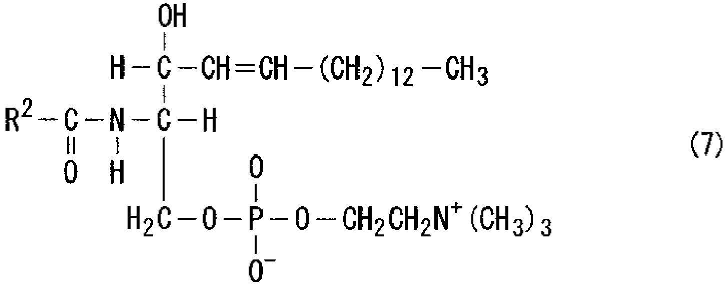

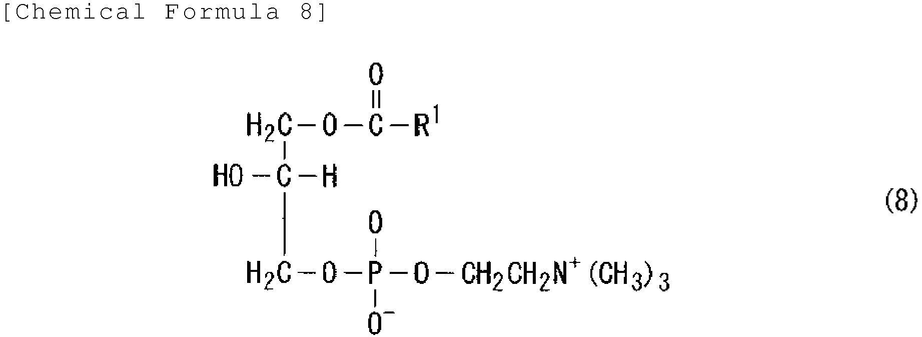

As shown in the above general formula (1), the soybean lecithin has two fatty-acid residues and one base. The soybean lecithin is a natural emulsifier/surfactant having a wide variety of properties such as an antioxidant property, a releasing property, a dispersing property, a foaming/defoaming property, a water retention property, a binding property to protein/starch, a chocolate viscosity lowering property, etc. The soybean lecithin is obtained by filtering crude soybean oil extracted from soybeans, adding about 2% of hot water thereto and stirring, and drying the obtained rubber-like material separated from the oil phase. Further characteristics of the soybean lecithin includes that a large amount of supply is possible at a low cost, and that the lecithin can be obtained in various forms depending on the degree of purification. Thus, a desired type can be selected in view of the conditions of use.

The egg-yolk lecithin is a lecithin made from phospholipid of egg-yolk. The egg-yolk of a hen's egg contains 48% of water, 16% of protein, and 33% of lipid, 30% in the lipid being phospholipid. The lipid of the egg-yolk is constituted by 65% of neutral lipid, 30% of phospholipid, and 4% of cholesterol. Further, the egg-yolk phospholipid is constituted by 70% to 80% of Phosphatidylcholine represented by the above general formula (5), 10% to 15% of Phosphatidylethanolamine represented by the above general formula (6), 1% to 3% of Sphingomyeline represented by the above general formula (7), and 1% to 2% of Lysophosphatidylcholine represented by the above general formula (8).

Similar to the lecithin mentioned above, the lysolecithin functions as a surfactant for dispersing water in a form of fine particles in a fat, or vice versa. The lysolecithin has a structure that one fatty acid is removed from the lecithin, and may be obtained by lyso-conversion of a soybean lecithin represented by the above general formula (1), a lecithin represented by the above general formulae (5) to (8), and the like. Here, the lyso-conversion means eliminating a fatty-acid residue at position 2 of a glycerin group in the lecithin, using an enzyme, Phospholipase A2.

Further, the lysolecithin is a natural emulsifier having a wide variety of properties such as an antioxidant property, a releasing property, a dispersing property, a foaming/defoaming property, a water retention property, a binding property to protein/starch, a chocolate viscosity lowering property, etc.

In the emulsion, the mixing ratio of the lipid mixture containing phospholipid, etc., used as an emulsifier is preferably 0.1 parts by mass or more and 40 parts by mass or less, more preferably 1 part by mass or more and 20 parts by mass or less, relative to 100 parts by mass of the fat.

If the mixing ratio of the emulsifier is less than 0.1 parts by mass relative to 100 parts by mass of the fat, emulsification hardly occurs. Whereas, when the mixing ratio of the emulsifier exceeds 40 parts by mass relative to 100 parts by mass of the fat, the fat and the emulsifier are not dispersed well in water, and emulsification does not progress well.

When both the lecithin and the lysolecithin are used (co-used) as the emulsifier, the mixing ratio of the lecithin and the lysolecithin is preferably 20:80 (wt:wt) to 80:20 (wt:wt), and more preferably 70:30 (wt:wt) to 30:70 (wt:wt).

Further, the emulsion contains a polyhydric alcohol having a high affinity for water. As mentioned above, the polyhydric alcohol is preferably saccharides and/or sugar alcohols. Preferable saccharides include monosaccharides, and disaccharides such as sucrose, maltose, lactose, etc. A sugar alcohol is a polyhydric alcohol obtained by reducing a carbonyl group of a saccharide. Preferable sugar alcohols include glycerin, xylitol, lactitol, maltitol, sorbitol, etc. Among them, monosaccharides are particularly preferable, such as fructose, glucose, xylose, galactose, mannose, arabinose, xylulose, ribulose, and the like. As for the sugar alcohol, glycerin is preferable in view of its easy availability, etc. Among the above polyhydric alcohols, i.e., saccharides and/or sugar alcohols, one polyhydric alcohol can be selected and used, or a plurality of polyhydric alcohols can be mixed and used.

In general, an oil phase constituted by a fat, an emulsifier, etc., has a higher refractive index than an aqueous phase. Thus, light is reflected at the boundary surface of the oil phase and the aqueous phase, to thereby decrease the transparency of the emulsion. When a polyhydric alcohol such as a saccharide and/or a sugar alcohol which is classified as the aqueous phase, is mixed to this emulsion, the refractive index of the aqueous phase increases, and becomes closer to the refractive index of the oil phase, to thereby increase the transparency of the emulsion. In this case, if the difference of the refractive index between the aqueous phase and the oil phase is within 10 Brix%, a favorable transparency can be obtained. In addition, the above-mentioned charge neutralization agent also has an effect of increasing the refractive index of the aqueous phase. Thus, by appropriately adjusting the amount of the polyhydric alcohol such as a saccharide and/or a sugar alcohol and the amount of the charge neutralization agent used, the transparency of the emulsion can be maintained at a high level.

The mixing amount of the polyhydric alcohol such as a saccharide and/or a sugar alcohol is preferably 15% to 80% by mass, and more preferably 40% to 80% by mass, in the aqueous phase constituted by the water, the polyhydric alcohol, and the charge neutralization agent.

If the mixing amount of the polyhydric alcohol such as a saccharide and/or a sugar alcohol in the aqueous phase is less than 15% by mass, the refractive index of the aqueous phase of the emulsion may not be made close enough to the refractive index of the oil phase of the emulsion, and thus, increasing the transparency of the emulsion becomes difficult. On the other hand, if the mixing amount of the polyhydric alcohol such as a saccharide and/or a sugar alcohol in the aqueous phase exceeds 80% by mass, the viscosity increases, and as a result, dispersing the fat and the emulsifier in the water becomes difficult, and even if the dispersion is successful, the difference of the refractive index between the oil phase and the aqueous phase becomes large, resulting in making the emulsion opaque. Further, if the ratio of the aqueous phase is increased in order to prevent the viscosity from increasing, separation between the aqueous phase and the oil phase becomes difficult to occur if the temperature is increased to a predetermined temperature.

Preferably, an ionic compound which generates at least one ion selected from a group consisting of Na⁺, K⁺, Ca²⁺, Mg²⁺, Cl⁻, H₂PO₄⁻, HPO₄²⁻ , and HCO₃⁻, is further added, as a charge neutralization agent, to the emulsion constituting the temperature-indicating medium according to the present embodiment.

By adding the charge neutralization agent, the electric charge of the emulsifier, etc., constituting the emulsion may be neutralized, resulting in improving the separation property between the oil phase and the aqueous phase when the temperature of the emulsion is increased from the temperature at which the emulsion is solidified. Here, neutralization means that the intensity (coulomb force) of the charge of micelles dispersed in the emulsion is reduced by the opposite charge. When the charge intensity of the micelles decreases, stability of the micelles appropriately decreases, leading to increasing the separation property between the oil phase and the aqueous phase.

The concentration of the charge neutralization agent relative to the total amount of the water, the polyhydric alcohol such as saccharides and/or sugar alcohols, and the charge neutralization agent (in the aqueous phase), is preferably 5% by mass or less. If the concentration exceeds 5% by mass, the transparency control of the emulsion becomes difficult, the aqueous phase ratio becomes too high, and the separation property between the oil phase and the aqueous phase decreases.

The ion of the charge neutralization agent mentioned above is univalent or divalent, but the valence of the ion is not limited thereto. For example, a divalent ion has higher ion valence than a univalent ion, and the higher the ion valence, the higher the charge neutralization ability, and the higher the ability of increasing the separation property between the oil phase and the aqueous phase.

Further, in order to adjust the solidifying point, the viscosity, etc., of the emulsion within a desired range, a water soluble polymer may be mixed to the emulsion. The melting point, the solidifying point (activation temperature of the temperature-indicating medium), the viscosity, etc., of the emulsion can be adjusted within a desired range by changing the kind, the mixing amount, etc., of the water soluble polymer.

Examples of such a water soluble polymer includes sodium alginate, cellulose derivatives (for example, methyl cellulose, carboxymethyl cellulose, hydroxyethyl cellulose, hydroxypropyl cellulose, etc.), gelatin, polyacrylamide, polyoxyethylene oxide, polyoxypropylene oxide, polyvinyl alcohol, carboxyvinyl polymer, polyvinylpyrrolidone, polyvinylpyrrolidone-vinyl acetate copolymer, vinyl acetate-crotonic acid copolymer, sodium polyacrylate, isobutene-maleic anhydride, polyacrylamide, polyvinyl ether, etc. With respect to the water soluble polymer, the higher the polymerization degree, the higher the viscosity, which makes emulsification more difficult. Therefore, using a water soluble polymer having a weight-average molecular weight of 100000 or less is preferable.

Further, a dye (a water soluble dye or an oil soluble dye), as well as an antimicrobial agent, may be added to the emulsion.

The dyes are preferably natural colorants which are harmless if eaten. Conventionally known dyes can be used, such as marigold, caramel dye, gardenia dye, anthocyanin dye, paprika dye, safflower dye, monascus dye, flavonoid dye, cochineal dye, Amaranth (Red No. 2), Erythrosine (Red No. 3), Allura Red AC (Red No. 40), New Coccine (Red No. 102), Phloxine (Red No. 104), Rose Bengal (Red No. 105), Acid Red (Red No. 106), Tartrazine (Yellow No. 4), Sunset Yellow FCF (Yellow No. 5), Fast Green FCF (Green No. 3), Brilliant Blue FCF (Blue No. 1), Indigo Carmine (Blue No. 2), and the like. By adding such a dye, when plural kinds of emulsions are used at the same time, each emulsion or each group of emulsions can be identified, and in addition, an emulsion excellent in design can be provided.

Next, by way of example, a method for producing an emulsion which constitutes the temperature-indicating medium according to the present embodiment will be explained. First, an emulsifier is dissolved in a fat to prepare a liquid mixture of the fat (liquid fat mixture). When two or more kinds of fats are used, the fats are previously mixed, and thereafter, the emulsifier is dissolved in the fat mixture.
As mentioned above, the mixing ratio of the fat and the emulsifier is that 0.1 parts by mass or more and 40 parts by mass or less of the lipid mixture (emulsifier) is mixed to 100 parts by mass of the fat.

Next, the above-mentioned fat mixture is mixed, drop by drop, with an aqueous solution prepared to have predetermined concentrations of a polyhydric alcohol such as a saccharide and/or a sugar alcohol, and a charge neutralization agent, while the aqueous solution is stirred. The mixture is sufficiently stirred so as to disperse fine particles of the fat in the aqueous solution, and obtain an emulsion used for the temperature-indicating medium according to the present embodiment. Here, the aqueous solution is prepared so that, as mentioned above, the ratio of the polyhydric alcohol such as a saccharide and/or a sugar alcohol in the aqueous phase constituted by the water, the polyhydric alcohol, and the charge neutralization agent is 15 to 80% by mass, and the ratio of the charge neutralization agent in the total amount of the water, the polyhydric alcohol, and the charge neutralization agent is 5% by mass or less.

Further, as mentioned above, a dye (water soluble dye or oil soluble dye) and an antimicrobial agent may be mixed to the aqueous solution, in accordance with needs.

The temperature-indicating medium according to the present embodiment is structured by the above emulsion housed in an airtight container which is at least partly transparent. Further, the temperature-indicating medium utilizes features that the emulsion is a stable and uniform transparent liquid at around, for example, a room temperature (20 to 25ºC), and is solidified to have less transparency at a predetermined temperature, for example, at -60 to 20ºC, and is subjected to phase separation into an aqueous phase and an oil phase when the temperature of the emulsion is raised again to a temperature exceeding a predetermined temperature (a temperature exceeding the melting points of the fat and the emulsifier which constitutes the emulsion), and that once the phase separation occurs, the emulsion never returns to the original state (irreversible reaction). Therefore, by optically identifying the state of the emulsion, i.e., whether the emulsion is transparent, opaque, or phase-separated, by, for example, eyes or a sensor, through the transparent part of the container, one can easily determine whether the temperature-indicating medium has been cooled to a predetermined temperature and activated, or whether the package provided with this temperature-indicating medium has been exposed to a temperature higher than a set temperature.

The airtight container has a portion (space) in which the emulsion is housed, and is preferably made of a transparent material which allows optical observation of the state that oil drops of the emulsion are solidified and the emulsion becomes less transparent, and the state that the phase separation into an aqueous phase and an oil phase occurs. Preferably, the transparent material may be glass, a transparent plastic, or a material harmless when eaten. The material harmless when eaten may be, for example, gelatin, pullulan, oblate, gum, candy, etc. The shape of the material may be, for example, a tube, a plate, a film, a sphere, etc. For only the purpose of observing the state of the emulsion, i.e., increase of transparency, decrease of transparency (becoming opaque), or occurrence of phase separation, only a part of the airtight container corresponding to a part around the boundary of the aqueous phase and the oil phase when the phase separation of the emulsion occurs, may be made of a transparent material, and other parts of the container may be made of opaque metal, or the like.

In particular, the airtight container made of a flexible film is preferable, because the temperature-indicating medium can be adhered to an object such as a package along the outer shape thereof, and in addition, when an external force is applied to the temperature-indicating medium, the airtight container itself can be deformed to avoid the influence of the force.

Further, in order to prevent an influence from the volume change of the liquid housed in the airtight container, caused by the phase separation of the emulsion, for example, air or an inert gas may be included in the airtight container together with the emulsion.

Conventionally, the temperature-indicating medium is not transparent either before or after the solidification of the emulsion, and thus, when the temperature-indicating medium is cooled to a predetermined temperature, whether the medium is solidified or not cannot be easily determined by eyes. On the other hand, the temperature-indicating medium according to the present embodiment has a high transparency before the emulsion is solidified, and the transparency decreases when the temperature-indicating medium is placed at a low temperature environment in which the emulsion can be activated. Thus, the fact of being placed in a low temperature environment can be identified from the decrease of the transparency. Further, because the transparency largely decreases at the time of solidification (activation), solidification of the emulsion can be identified by eyes, and thus, quick determination as to whether or not the temperature-indicating medium has been activated can be performed easily and certainly. In addition, after the temperature-indicating medium is activated and becomes opaque, as the temperature is raised, the temperature-indicating medium becomes transparent again at a temperature lower than the separation temperature. With this phenomenon, one can visually identify that the temperature becomes closer to the separation temperature.

Furthermore, the emulsion according to the present embodiment is composed of water, a fat, a lipid mixture containing an emulsifier, a polyhydric alcohol such as a saccharide and/or a sugar alcohol, and a charge neutralization agent, which do not have any bad influences to the human body. Therefore, even if the emulsion is adhered to skin, a food, or a medicine, and thereby, enters the body, human health is not damaged. Accordingly, if the temperature-indicating medium according to the present embodiment is adhered or coated on a package of a food, a medicine, etc., there is not risk of causing an accident, and the emulsion is extremely safe. Therefore, the temperature-indicating medium according to the present embodiment can be applied in a wide range of fields including the fields to which the conventional product cannot be easily applied.

### [EXAMPLES]

Hereinbelow, specific examples of the present disclosure are to be explained. The examples are described below for the purpose of specifically exemplifying the present disclosure, and the present disclosure is not limited to these examples.

### <Example 1>

60 g of NIKKOL TRIFAT C-24 (trade name, melting point: 20 to 26ºC, manufactured by Nikko Chemicals Co., Ltd.) as triacylglycerol, 60 g of COCONARD RK (trade name, freezing point: 7ºC, manufactured by Kao Corporation) as triacylglycerol, 70 g of butyl stearate (melting point: 20ºC, carbon number: 22, manufactured by Kanto Chemical Co., Inc.), 10 g of butyl myristate (freezing point: 5ºC, carbon number: 18, manufactured by Wako Pure Chemical Industries, Ltd.), and 0.5 g of marigold were mixed, and a mixture liquid of these was prepared. Then, 2 g of lecithin powder (trade name: SLP-WHITE, manufactured by Tsuji Oil Mills, Co., Ltd.) and 15 g of lysolecithin paste (trade name: SLP-Paste Lyso, manufactured by Tsuji Oil Mills, Co., Ltd.) were dissolved in the mixture liquid. Thereby, a fat mixture liquid containing a dye was prepared.

Next, 0.1 g of Blue No. 1 as a dye was added to 109.52 g of aqueous solution prepared to have 60.0% by mass of fructose (manufactured by Kanto Chemical Co., Inc.) as a saccharide and 3% by mass of NaCl. 217.76 g of the above fat mixture liquid was added little by little to this aqueous solution containing the dye, while the aqueous solution is stirred (aqueous phase ratio: 33.5% by mass). After all of the fat mixture liquid was added, the mixture of the aqueous solution and the fat mixture liquid were stirred and emulsified by an emulsification machine at 4500 rpm for 5 minutes, at a room temperature. Then, approximately 0.3 g to 0.5 g of the resultant emulsion was filled and sealed in a 20×20 mm transparent polyethylene soft packaging material, to produce a temperature-indicating medium of Example 1.

### <Examples 2 to 5, Reference Example>

Emulsions were prepared in the same way as Example 1, except that aqueous solutions having 57.5% by mass of fructose, and 0.2, 1.0, 3.0, 5.0% by mass of NaCl, were used, respectively, and temperature-indicating media of Examples 2 to 5 were made. In Example 2, 95.82 g of the aqueous solution (and additionally, 0.1 g of Blue No. 1) and 217.75 g of the fat mixture liquid were used (aqueous phase ratio: 30.6% by mass). In Example 3, 97.65 g of the aqueous solution (and additionally, 0.1 g of Blue No. 1) and 217.75 g of the fat mixture liquid were used (aqueous phase ratio: 31.0% by mass). In Example 4, 102.62 g of the aqueous solution (and additionally, 0.1 g of Blue No. 1) and 217.75 g of the fat mixture liquid were used (aqueous phase ratio: 32.0% by mass). In Example 5, 108.07 g of the aqueous solution (and additionally, 0.1 g of Blue No. 1) and 217.75 g of the fat mixture liquid were used (aqueous phase ratio: 33.2% by mass). Further, as Reference Example, an emulsion was prepared in the same way as Example 1, except that an aqueous solution having 65.0% by mass of fructose and 5.0% by mass of NaCl was used, and a temperature-indicating medium of Reference Example was made. In this case, 135.07 g of the aqueous solution (and additionally, 0.1 g of Blue No. 1) and 217.74 g of the fat mixture liquid were used (aqueous phase ratio: 38.3% by mass).

### <Comparative Examples 1 and 2>

Aqueous solutions and fat mixture liquids were prepared in the same way as Examples 1 and 2, except that NaCl was not added to emulsions. In Comparative Example 1, 102.47 g of the aqueous solution (and additionally, 0.1 g of Blue No. 1) and 217.75 g of the fat mixture liquid were used (aqueous phase ratio: 32.0% by mass). In Comparative Example 2, 95.35 g of the aqueous solution (and additionally, 0.1 g of Blue No. 1) and 217.75 g of the fat mixture liquid were used (aqueous phase ratio: 30.5% by mass). A temperature-indicating medium was made for each of the Comparative Examples.

Table 1 shows the content of the temperature-indicating medium according to each of Examples 1 to 5, Comparative Examples 1 and 2, and Reference Example. Table 1 also shows a calculation result of the aqueous phase ratio of each emulsion. Further, Table 1 shows an evaluation result of each temperature-indicating medium. The evaluation result includes a result of separation/unseparation identified by the below-mentioned process, and a refractive index of the aqueous phase (unit: Brix%). The refractive index of the aqueous phase was measured by Pocket Sugar Meter APAL-J (manufactured by As One Corporation). The refractive index of the oil phase of the emulsion, measured in the same way, was 63.8 Brix%.

The separation/unseparation of the emulsion was identified by measurement described below. Namely, each temperature-indicating medium (room temperature (approximately 23ºC)) produced was cooled in a 3ºC environment, and thereby, the oil phase of the emulsion which was transparent at the room temperature, was frozen (crystallized) and turned into opaque (activated). Thereafter, the resultant temperature-indicating medium was subjected to gradient heating in accordance with the processes described below, and observed by eyes to find out whether or not the separation of the emulsion into the oil phase and the aqueous phase occurred. The process of the gradient heating includes: first, placing the temperature-indicating medium in an 8ºC environment for 5 minutes to make the temperature of the temperature-indicating medium approximately 8ºC; then, raising the environmental temperature to 13ºC at a raising rate of 0.1ºC/3 minutes; and identifying the separation temperature. Here, the separation temperature is a temperature of the environment when the emulsion is separated into the oil phase and the aqueous phase. Table 1 describes, in the relevant section, the temperature at which the separation occurred (separation temperature) when the emulsion was separated, and describes "unseparated" when the emulsion was not separated.

As shown in Table 1, the higher the fructose concentration and the NaCl concentration, the higher the refractive index of the aqueous phase. Specifically, referring to the cases wherein the fructose concentration was 57.5% by mass, when the NaCl concentration was 0% by mass, the refractive index was 56.6 Brix% (Comparative Example 2), whereas when the NaCl concentration was 5.0% by mass, the refractive index was raised to 61.6 Brix% (Example 5). Also, referring to the cases where the NaCl concentration was 3.0% by mass, when the fructose concentration was 57.5% by mass, the refractive index was 59.6 Brix% (Example 4), whereas when the fructose concentration was 60.0% by mass, the refractive index was raised to 62.0 Brix%. The reason therefor is believed that the addition of fructose and NaCl increases the refractive index of the aqueous phase. As a result, the refractive index of the aqueous phase becomes extremely close to the refractive index of the oil phase (63.8 Brix%), leading to the increase of transparency.

In all of the cases wherein the fructose concentration was 57.5% by mass, including the Comparative Example (wherein the NaCl concentration was 0% by mass), separation occurred when the temperature was raised again. However, in cases wherein the fructose concentration was raised to 60.0% by mass, the separation property was decreased, i.e., separation occurred when the NaCl concentration was 3.0% by mass (Example 1) (separation temperature: 11.6 to 12.0ºC), but separation did not occur when the NaCl concentration was 0% by mass (Comparative Example 1). Further, referring to Reference Example wherein the emulsion had a fructose concentration of 65.0% by mass and a NaCl concentration of 5.0% by mass, the separation did not occur even through the NaCl concentration was as high as 5.0% by mass. The reason therefor is believed that NaCl is a charge neutralization agent generating univalent ions, and has an inferior ability for increasing the separation of the emulsion compared to a charge neutralization agent generating divalent ions.

**[Table 1]**

| | Fructose | NaCl | Aqueous Phase Ratio | Activation Environment | Evaluation Result | |
|---|---|---|---|---|---|---|
| | mass% | mass% | mass% | °C | Separation Temperature (°C) | Refractive Index (Brix%) |
| Example 1 | 60.0 | 3.0 | 33.5 | 3.0 | 11.6-12.0 | 62.0 |
| Example 2 | 57.5 | 0.2 | 30.6 | 3.0 | 11.2 | 56.8 |
| Example 3 | 57.5 | 1.0 | 31.0 | 3.0 | 10.9-11.0 | 57.6 |
| Example 4 | 57.5 | 3.0 | 32.0 | 3.0 | 11.6 | 59.6 |
| Example 5 | 57.5 | 5.0 | 33.2 | 3.0 | 13.0-17.5 | 61.6 |
| Comparative Example 1 | 60.0 | 0.0 | 32.0 | 3.0 | Unseparated | 59.0 |
| Comparative Example 2 | 57.5 | 0.0 | 30.5 | 3.0 | 11.1-11.2 | 56.6 |
| Reference Example | 65.0 | 5.0 | 38.3 | 3.0 | Unseparated | 68.9 |

### <Examples 6 to 10>

Emulsions were prepared in the same way as Example 1, except that: CaCl₂ having a predetermined concentration was used as a charge neutralization agent generating divalent ions; aqueous solutions having a fructose concentration of 65.0% by mass and CaCl₂ concentrations of 1.0% by mass, 3.0% by mass, 5.0% by mass, respectively, were used (Examples 6 to 8); and aqueous solutions having a fructose concentration of 70.0% by mass and CaCl₂ concentrations of 1.0% by mass and 3.0% by mass, respectively, were used (Examples 9 and 10). Thereby, temperature-indicating media of Examples 6 to 10 were made. Here, in Example 6, 116.53 g of the aqueous solution (and additionally, 0.1 g of Blue No. 1) and 217.76 g of the fat mixture liquid were used (aqueous phase ratio: 34.9% by mass). In Example 7, 125.24 g of the aqueous solution (and additionally, 0.1 g of Blue No. 1) and 217.75 g of the fat mixture liquid were used (aqueous phase ratio: 36.5% by mass). In Example 8, 135.08 g of the aqueous solution (and additionally, 0.1 g of Blue No. 1), 217.74 g of the fat mixture liquid were used (aqueous phase ratio: 38.3% by mass). In Example 9, 136.61 g of the aqueous solution (and additionally, 0.1 g of Blue No. 1) and 217.75 g of the fat mixture liquid were used (aqueous phase ratio: 38.6% by mass). In Example 10, 148.41 g of the aqueous solution (and additionally, 0.1 g of Blue No. 1) and 217.75 g of the lipid mixture liquid were used (aqueous phase ratio: 40.5% by mass). The emulsions were produced at the emulsification rate (agitation rate) for mixing the aqueous solution and the fat mixture liquid of 3500 rpm.

### <Comparative Examples 3 and 4>

Aqueous solutions and fat mixture liquids were prepared in the same way as Examples 6 to 10, except that CaCl₂ was not added to emulsions. In Comparative Example 3, 115.78 g of the aqueous solution (and additionally, 0.1 g of Blue No. 1) and 217.75 g of the fat mixture liquid were used (aqueous phase ratio: 34.7% by mass). In Comparative Example 4, 132.07 g of the aqueous solution (and additionally, 0.1 g of Blue No. 1) and 217.74 g of the fat mixture liquid were used (aqueous phase ratio: 37.8% by mass). A temperature-indicating medium was made for each of the Comparative Examples.

Table 2 shows the content, the aqueous phase ratio, and the evaluation result of the temperature-indicating medium according to each of Examples 6 to 10 and Comparative Examples 3 and 4. The evaluation method is the same as that of the cases shown in Table 1.

In Table 2, referring to the cases wherein the fructose concentration was 65% or 70%, separation of the emulsion occurred in all of the cases when the temperature was raised again (Example 6 to 10), except the cases where the CaCl₂ concentration was 0% by mass (Comparative Examples 3 and 4). The reason therefor is believed that CaCl₂ is capable of generating divalent ion (Ca²⁺), and thus, has a superior ability for increasing the separation property of the emulsion when the temperature is raised again, compared to the charge neutralization agent generating univalent ions, such as NaCl.

**[Table 2]**

| | Fructose | CaCl₂ | Aqueous Phase Ratio | Activation Environment | Evaluation Result | |
|---|---|---|---|---|---|---|
| | mass% | mass% | mass% | ºC | Separation | Refractive |
| | | | | | Temperature (ºC) | Index (Brix%) |
| Example 6 | 65.0 | 1.0 | 34.9 | 3.0 | 10.8-11.5 | 65.3 |
| Example 7 | 65.0 | 3.0 | 36.5 | 3.0 | 10.9-11.2 | 68.3 |
| Example 8 | 65.0 | 5.0 | 38.3 | 3.0 | 11.5 | 71.2 |
| Example 9 | 70.0 | 1.0 | 38.6 | 3.0 | 10.0-11.0 | 70.1 |
| Example 10 | 70.0 | 3.0 | 40.5 | 3.0 | 10.0-11.0 | 73.1 |
| Comparative Example 3 | 65.0 | 0.0 | 34.7 | 3.0 | Unseparated | 63.8 |
| Comparative Example 4 | 70.0 | 0.0 | 37.8 | 3.0 | Unseparated | 68.7 |

### <Examples 11 and 12>

Instead of the saccharide (fructose), glycerin, i.e., a sugar alcohol, was used. An aqueous solution was prepared to have a glycerin concentration of 69% by mass and a CaCl₂ concentration of 0.1% by mass. 0.0239 g of Blue No. 1 was added to 72.4 g of the aqueous solution prepared as above. 217.75 g of the fat mixture liquid, same as that of Example 1, was added little by little to the aqueous solution containing the dye while the aqueous solution was stirred (aqueous phase ratio: 25.0% by mass). After all of the fat mixture liquid was added, the mixture of the aqueous solution and the fat mixture liquid were stirred and emulsified by an emulsification machine at 2500 rpm for 4.5 minutes, at a room temperature. Then, approximately 0.3 g to 0.5 g of the resultant emulsion was filled and sealed in a 20×20 mm transparent polyethylene soft packaging material, to produce a temperature-indicating medium of each of Examples 11 and 12.

Table 3 shows the content, the aqueous phase ratio, and the evaluation result of the temperature-indicating medium according to each of Examples 11 and 12.

**[Table 3]**

| | Glyce rin | CaCl₂ | Aqueous Phase Ratio | Activation Environment | Evaluation Result | |
|---|---|---|---|---|---|---|
| | mass% | mass% | mass% | ºC | Separation Temperature (ºC) | Refractive Index (Brix%) |
| Example 11 | 69.0 | 0.1 | 25.0 | 3.0 | 10.9 | 55.8 |
| Example 12 | 69.0 | 0.1 | 25.0 | 0.0 | 10.5 | 55.8 |

In Example 11, the temperature-indicating medium was cooled in a 3ºC environment and activated, and thereafter, the temperature-indicating medium was subjected to gradient heating in the same way as Example 1. The emulsion became separated into the oil phase and the aqueous phase at the temperature of 10.9ºC. The experiment was performed using two pieces of the temperature-indicating medium, and all of the pieces were activated within 12 hours, and separated when the temperature was raised.

In Example 12, the temperature-indicating medium was cooled in a 0ºC environment and acrivated, and thereafter, the temperature-indicating medium was subjected to gradient heating in the same way as Example 1. The emulsion became separated into the oil phase and the aqueous phase at the temperature of 10.45ºC. The experiment was performed using two pieces of the temperature-indicating medium, and all of the pieces were activated within 10 hours, and separated when the temperature was raised.

### <Example 13> Example of applying the present disclosure

The emulsion of Example 1, prepared by using an aqueous solution having 60.0% by mass of fructose and 3% by mass of NaCl, was filled and sealed in a transparent polyethylene soft packaging material to make a temperature-indicating medium. The temperature-indicating medium was cooled in a 3ºC environment, and thereby, the oil phase of the emulsion which was transparent at the room temperature (approximately 23ºC), was frozen (crystallized) and turned into opaque. Thereafter, the resultant temperature-indicating medium was subjected to gradient heating in the same way as Example 1.

FIGS. 1A, 1B, and 1C respectively show states of the temperature-indicating medium 10. FIG. 1A shows the state that transparent emulsion 12 is housed in an airtight container 11. FIG. 1B shows the state that the oil phase (oil drop) of the emulsion 12 is solidified and the emulsion 12 housed in the airtight container turned into opaque in an environment of 3ºC. FIG. 1C shows the state that the emulsion is subjected to gradient heating as in Example 1, and is phase separated into the aqueous phase 13 and the oil phase 14.

In FIG. 1A, the diagonal line drawn on the outer surface, located on the rear side in the figure, of the transparent airtight container 11, can be seen through the emulsion 12. Thus, the emulsion 12 can be determined as transparent. In FIG. 1B, most part of the above-mentioned line disappears (cannot be seen). Thus, the emulsion can be easily determined as opaque.

FIG. 1C shows the state that the emulsion 12 is separated into the aqueous phase 13 and the oil phase 14.

When the temperature-indicating medium 10 according to the example, is cooled to a predetermined temperature and the emulsion is solidified, oil drops of the emulsion 12 were crystallized and turned into white, and thereby the emulsion loses its transparency. In order to identify the state of the emulsion 12 and the separation into the aqueous phase 13 and the oil phase 14 by eyes or by using a sensor, utilizing this change of transparency, as shown in FIGS. 1A, 1B, or 1C, identification marks or characters may be arranged on the rear side of the airtight container 11. Whether or not the emulsion 12 is solidified and whether or not the phase separation has occurred, can be correctly identified by reading the information arranged underneath.

### [Explanation of Numerals]

10 temperature-indicating medium, 11 airtight container, 12 emulsion, 13 aqueous phase, 14 oil phase

## Claims

1. A temperature-indicating medium comprising an emulsion which is in a liquid form at a room temperature, solidified when cooled to a predetermined temperature, and melted and phase-separated when a temperature is raised from the solidified temperature,
wherein the emulsion comprises water, a fat, an emulsifier, a polyhydric alcohol, and a charge neutralization agent, and an aqueous phase ratio which is a ratio of a sum of the water, the polyhydric alcohol, and the charge neutralization agent, relative to the total amount of the water, the fat, the emulsifier, the polyhydric alcohol, and the charge neutralization agent, is 10 to 50% by mass.

2. A temperature-indicating medium according to claim 1, wherein the charge neutralization agent is an ionic compound which generates at least one selected from a group consisting of Na⁺, K⁺, Ca²⁺, Mg²⁺, Cl⁻, H₂PO₄⁻, HPO₄²⁻, and HCO₃⁻.

3. A temperature-indicating medium according to claim 1 or claim 2, wherein the polyhydric alcohol is a saccharide and/or a sugar alcohol.

4. A temperature-indicating medium according to claim 3, wherein the saccharide is one or more saccharides selected from a group consisting of monosaccharides and disaccharides.

5. A temperature-indicating medium according to any one of claims 1 to 4, wherein a concentration of the polyhydric alcohol in the aqueous phase consisting of the water, the polyhydric alcohol, and the charge neutralization agent is 15 to 80% by mass.

6. A temperature-indicating medium according to any one of claims 1 to 5, further comprising a dye and an antimicrobial agent.

7. A temperature-indicating medium according to any one of claims 1 to 6, wherein the difference in the refractive index between the aqueous phase and the oil phase constituting the emulsion is within 10 Brix%, the aqueous phase consisting of the water, the polyhydric alcohol, and the charge neutralization agent, and the oil phase consisting of the emulsifier and the fat.

8. A temperature-indicating medium comprising an emulsion which is in a liquid form at a room temperature, solidified when cooled to a predetermined temperature, and melted and phase-separated when a temperature is raised from the solidified temperature,
wherein the emulsion comprises water, a fat, an emulsifier, a sugar alcohol, and a charge neutralization agent, and an aqueous phase ratio which is a ratio of a sum of the water, the sugar alcohol, and the charge neutralization agent, relative to the total amount of the water, the fat, the emulsifier, the sugar alcohol, and the charge neutralization agent, is 10 to 50% by mass.

9. A temperature-indicating medium according to claim 8, wherein the sugar alcohol is glycerin.
